(19) Europäisches Patentamt / European Patent Office / Office européen des brevets

(11) **EP 4 447 698 B1**

(12) **EUROPEAN PATENT SPECIFICATION**

(45) Date of publication and mention
of the grant of the patent:
**12.11.2025 Bulletin 2025/46**

(21) Application number: **22822432.5**

(22) Date of filing: **25.11.2022**

(51) International Patent Classification (IPC):
*A23G 9/04* (2006.01)     *A23G 9/20* (2006.01)
*A23G 9/32* (2006.01)     *A23G 9/46* (2006.01)
*A23G 9/52* (2006.01)

(52) Cooperative Patent Classification (CPC):
**A23G 9/04; A23G 9/20; A23G 9/32; A23G 9/46;
A23G 9/52;** A23G 2220/02

(86) International application number:
**PCT/EP2022/083306**

(87) International publication number:
**WO 2023/110366 (22.06.2023 Gazette 2023/25)**

(54) **CONCENTRATED PREMIX FOR A FROZEN CONFECTION**

KONZENTRIERTE VORMISCHUNG FÜR GEFRORENE SÜSSWAREN

PRÉMÉLANGE CONCENTRÉ POUR UNE CONFISERIE GLACÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.12.2021 EP 21214658**

(43) Date of publication of application:
**23.10.2024 Bulletin 2024/43**

(73) Proprietor: **MAGNUM IP HOLDINGS B.V.
1017 BM Amsterdam (NL)**

(72) Inventors:
• **ANSARI, Mansoor, Ahmed
  6708 WH Wageningen (NL)**
• **MUÑOZ IBAÑEZ, Marta, Maria
  6708 WH Wageningen (NL)**
• **VEITCH, Christopher, James
  6708 WH Wageningen (NL)**

(74) Representative: **Potter Clarkson
Chapel Quarter
Mount Street
Nottingham NG1 6HQ (GB)**

(56) References cited:
**EP-A1- 1 415 542     WO-A1-2020/187544
US-A- 2 619 422**

**Description**

**Field of the invention**

The invention relates to concentrated premixes for the manufacture of frozen confections. The concentrated premixes are oil-in water emulsions having a high total solids content.

**Background of the invention**

The manufacture of frozen confections (such as ice cream) is an energy intensive process involving several stages, typically: mix preparation (which consists of dosing and mixing of the ingredients); pasteurization and homogenization; ageing; freezing and hardening. Each of these stages requires energy.
EP 1 415 542 A1 discloses an ice-cream dessert material and method for the preparation thereof.
The production of frozen confections with sought-after organoleptic properties involves emulsifying the fat in the premix so that it is present in the form of very small droplets. This is typically achieved using homogenization equipment, most commonly a valve-type homogenizer in which the mix is forced through a small valve under high pressure. The usage efficiency of the homogenization equipment is a significant contributing factor to the overall energy consumption of the manufacturing process.
The process described in WO 2016/116336 aims to improve the usage efficiency of homogenization equipment. This is achieved by a split stream process in which an emulsion with a high fat content is prepared, and then subsequently diluted with an adjunct composition and aqueous liquid to form the premix. In order to produce especially high fat content emulsions, it is necessary to use specialist homogenization equipment, i.e. a Controlled Deformation Dynamic Mixer (CDDM) and/or a Cavity Transfer Mixer (CTM).
Preparing a concentrated premix for a frozen confection is challenging for a number of reasons. In order to provide commercial frozen confection products it is necessary to match the quality of premixes obtained by the standard process (i.e. by a process wherein the premix is manufactured at a standard concentration and does not require dilution). In order to achieve this, the concentrated premix should be formulated and produced in such a way as to avoid undissolved stabilizers, and large oil droplets.
Finally, the concentrated premix must be able to be reliably manufactured at scale. The present inventors have managed to overcome one or more of these challenges, and produce high-quality concentrated premixes which have a high solids content and are suitable for the manufacture of frozen confections.

**Summary of the invention**

In a first aspect, the invention relates to a concentrated premix for making a frozen confection, wherein the concentrated premix is an oil-in-water emulsion in liquid form comprising: fat in an amount of 8 wt% to 20 wt%; sugars in an amount of 42 wt% to 64 wt%; milk protein in an amount of 4.6 wt% to 14 wt%; stabilizer in an amount of 0.6 wt% to 1.3 wt%, wherein the stabilizer is selected from the group consisting of alginates, carrageenan, locust bean gum, guar gum, pectin, xanthan gum, sodium carboxymethyl cellulose, and mixtures thereof; emulsifier in an amount of 0.5 wt% to 2 wt%; and water in an amount of 16 wt% to 36 wt%.
The concentrated premix can simply be diluted with water to produce a premix for a frozen confection which contains all the ingredients in the appropriate proportions. Furthermore, the concentrated premix can be tailored in the dilution step by adding a small quantity of flavouring and/or colouring.
A further advantage is that the dilution step can occur at a location that is remote from the location where the concentrated premix is prepared. Since the concentrated premix is in the form of a liquid, it can conveniently be stored and/or shipped in an intermediate bulk container (IBC). Thus, in a second aspect the present invention also encompasses an intermediate bulk container containing the concentrated premix.
In a third aspect, the invention relates to a process for preparing the concentrated premix of the first aspect, the process comprising:

>    (a) preparing a mixture of aqueous solids comprising sugars, milk protein, and stabilizer, wherein the mixture is prepared by:
>
>>        (i) combining at least one of:
>>        sugars, and/or milk protein with water; and then
>>        (ii) adding stabilizer; and then
>>        (iii) optionally adding any remaining sugars and/or milk protein;

(b) combining the mixture of aqueous solids with oil and emulsifying to form the concentrated premix.

In order to facilitate hydration of the stabilizer, the stabilizer is added after at least one of the more readily soluble ingredients has been combined with water. Preferably, the stabilizer is added after at least part of the sugars have been combined with the water, for example after sucrose has been dissolved by combining it with water.

The present inventors have surprisingly found that the concentrated premix can be prepared using a rotor-stator mixer to perform the emulsification step. This is advantageous because a rotor-stator mixer has a relatively compact factory footprint and good energy efficiency, as well as requiring a lower amount of capital outlay than high pressure homogenization equipment. In a fourth aspect, use of an apparatus comprising a rotor-stator mixing device for preparing the concentrated premix is envisaged.

## Detailed description of the invention

The invention relates to a concentrated premix for making frozen confections. The concentrated premix is an oil-in-water emulsion in liquid form. The concentrated premix is pumpable because is in liquid form, and thus easy to handle in subsequent processing steps (e.g. subsequent dilution steps). The concentrated premix contains all the ingredients necessary to make a frozen confection. With the exception of water, the ingredients are present in the concentrated premix in the appropriate proportions. As such, the concentrated premix only needs to be diluted with water to produce a premix for a frozen confection. Thus, it will be appreciated that the amount of the concentrated premix needed to manufacture a portion of frozen confection occupies a smaller volume than would be the case for a standard premix. This makes the concentrated premix more economical to store and transport.

An advantage of the concentrated premix of the present invention is that there is no need for it to have a very high fat content. This is in contrast to the split stream process described in WO 2016/116336, where a high fat emulsion has to be prepared (as it is subsequently diluted with an adjunct composition and then an aqueous liquid to form the frozen confection premix). The concentrated premix comprises fat in an amount of 8 wt% to 20 wt%. Preferably the concentrated premix comprises at least 9 wt% fat, at least 10 wt% fat, at least 11 wt% fat, or even at least 12 wt% fat. Preferably the concentrated premix comprises no more than 19 wt% fat, no more than 18 wt% fat, or even no more than 17 wt% fat.

The fat is preferably dairy fat (such as butterfat) or vegetable fat (such as coconut oil, palm oil, palm kernel oil, or a mixture thereof). For example, the fat may comprise dairy fat, coconut oil, or a mixture thereof. It is preferred that the fat is vegetable fat, and particularly preferred that the fat is coconut oil.

The concentrated premix comprises sugars in an amount of 42 wt% to 64 wt%. As used herein the term "sugars" includes monosaccharides, disaccharides and oligosaccharides (which are formed from 3 to 10 monosaccharide units). Monosaccharides include glucose, fructose, galactose and mannose. Disaccharides include sucrose, lactose and trehalose. Oligosaccharides include raffinose. The term "sugars" does not include polysaccharides, which comprise >10 monosaccharides. Some ingredients commonly included in frozen confections may contribute to the amount of sugars. For example, corn syrup (sometimes called glucose syrup) - a mixture of monosaccharides, disaccharides and oligosaccharides - is included. However, maltodextrin (a mixture of polysaccharides) is not included.

As explained above, the concentrated premix only needs to be diluted with water to produce a premix for a frozen confection. High concentrations of sugars may contribute unwanted sweetness and/or calories to the frozen confection that is ultimately prepared from the concentrated premix (following dilution and freezing). Therefore, the concentrated premix comprises sugars in an amount of no more than 64 wt%, preferably no more than 62 wt%, no more than 60 wt%, or no more than 58 wt%. Conversely, low concentrations of sugars may be inappropriate if the frozen confection that is ultimately prepared from the concentrated premix is a scoopable product, since a low concentration of sugars tend to result in frozen confections with a high ice content. Therefore, the concentrated premix comprises sugars in an amount of at least 42 wt%, preferably at least 44 wt%, or at least 46 wt%.

The concentrated premix comprises milk protein in an amount of 4.6 wt% to 14 wt%. Preferably, the concentrated premix comprises milk protein in an amount of at least 4.8 wt%, at least 5 wt%, or at least 5.2 wt%. Preferably, the concentrated premix comprises milk protein in an amount of no more than 12 wt%, no more than 10 wt%, or even no more than 8 wt%.

Preferably the milk protein is casein, whey protein, or a mixture thereof. Any source of milk protein may be used. However, since the concentrated premix has a low water content, the milk protein is preferably provided in the form of a powder. Suitable sources of milk protein in powder form include, for example, skimmed milk powder, whole milk powder, whey protein (including whey protein concentrate), yoghurt powder, processed soluble caseinate (such as sodium casinate), or a mixture thereof. Most preferably the source of milk protein is skimmed milk powder and/or whey protein concentrate. The source of milk protein may contain associated sugars. For example, skimmed milk powder is typically 35 wt% milk protein and 52 wt% lactose, and whey protein concentrates also contain lactose as well as milk protein.

As explained above, the concentrated premix only needs to be diluted with water to produce a premix for a frozen confection. As such, the ratio of milk protein:fat in the concentrated premix will be essentially the same as that of a premix for a frozen confection at a standard concentration (i.e. a premix which does not require dilution prior to being used to manufacture a frozen confection). The ratio of milk protein to fat in the concentrated premix is preferably 1:1 to 1:4, 1:1 to 2:7, 1:1 to 1:3, 1:1 to 2:3, 1:1 to 1:2, 2:3 to 1:4, 2:3 to 2:7, 2:3 to 1:3, or even 2:3 to 1:2.

The concentrated premix comprises stabilizer in an amount of 0.6 wt% to 1.3 wt%. Preferably, the concentrated premix comprises stabilizer in an amount of at least 0.65 wt%, at least 0.7 wt%, or at least 0.75 wt%. Preferably, the concentrated premix comprises stabilizer in an amount of no more than 1.2 wt%, no more than 1.1 wt%, or even no more than 1.0 wt%.

The stabilizer is selected from the group consisting of alginates (E400-E405), carrageenan (E407), locust bean gum (E410), guar gum (E412), pectin (E440), xanthan gum (E415), sodium carboxymethyl cellulose (E466), and mixtures thereof. More preferably, the stabilizer is selected from the group consisting of carrageenan, locust bean gum, guar gum, xanthan gum, and mixtures thereof (e.g. a mixture of locust bean gum and carrageenan - with or without guar gum).

The concentrated premix comprises emulsifier in an amount of 0.5 wt% to 2 wt%. Preferably the concentrated premix comprises emulsifier in an amount of at least 0.6 wt%, at least 0.7 wt%, or at least 0.8 wt%. Preferably the concentrated premix comprises emulsifier in an amount of no more than 1.7 wt%, no more than 1.5 wt%, or no more than 1.3 wt%. A single emulsifier or a mixture of emulsifiers may be used. For example, mono-/diglycerides (E471), which are commonly used as emulsifiers in frozen confections.

If the emulsion becomes too concentrated it may become difficult to handle in subsequent processing, in particular it may become difficult to pump. On the other hand, a low water activity can mean that the concentrated premix has a longer shelf-life. The concentrated premix comprises water in an amount of 16 wt% to 36 wt%. Preferably the concentrated premix comprises water in an amount of at least 17 wt%, at least 18 wt%, or at least 19 wt%. Preferably the concentrated premix comprises water in an amount of no more than 32 wt%, no more than 29 wt%, no more than 28 wt%, no more than 27 wt%, or even no more than 26 wt%. The concentrate premix of the present invention has a high total solids content. Since the concentrated premix comprises water in an amount of 16 wt% to 36 wt%, the total solids content of the concentrated premix is 64 wt% to 84 wt%. Preferably the total solids content of the concentrated premix is at least 68 wt%, at least 71 wt%, at least 72 wt%, at least 73 wt% or at least 74 wt%. Preferably the total solids content of the premix is no more than 83 wt%, no more than 82 wt%, or no more than 81 wt%. The total solids content of the concentrated premix affects the viscosity, with higher total solids leading to higher viscosity. This can be advantageous, since higher viscosities are associated with better oil droplet breakup. However, the power input required to achieve emulsification of the oil also increases with viscosity, and at very high viscosities there is a risk of the emulsification equipment being overloaded. Therefore, there is a need to balance these competing technical considerations.

The concentrated premix may optionally comprise non-nutritive sweetener, such as aspartame, acesulfame K, erythritol, sucralose, or one or more steviol glycosides such as rabaudioside A. Mixtures of two or more non-nutritive sweeteners may also be used.

The concentrated premix may optionally comprise one or more sugar alcohol(s). For example, erythritol, arabitol, glycerol, xylitol, sorbitil, mannitol, lactitol. maltitol, and mixtures thereof.

The concentrated premix may optionally comprise colours and/or flavours. Alternatively, such ingredients may be added when the concentrated premix is diluted.

An advantage of the concentrated premix is that it can be shipped to a remote location and then simply diluted with water at the remote location before being frozen in a conventional manner to produce a high quality frozen confection. As such, the finishing factory does not need to be equipped with a mix plant capable of handling and blending multiple powders. The concentrated premix can be shipped in any suitable container. Non limiting examples of containers include bottles, kegs, barrels, drums, and jerry cans.

Since the concentrated premix is in the form of a liquid, it can conveniently be stored and transported in an intermediate bulk container (IBC). Both rigid IBCs and flexible IBCs are commercially available, and either is suitable for storing and/or shipping the concentrated premix. Thus, the present invention also encompasses an intermediate bulk container containing the concentrated premix. Such IBCs will typically have a tank capacity of up to 2000 litres, for example 250 litres to 1500 litres, or even 500 litres to 1250 litres.

Alternatively, the concentrated liquid can be transported using a tanker truck. Tanker trucks usually comprise a cylindrical tank lying upon the body of the truck in an essentially horizontal manner. The tank will typically comprise multiple compartments and/or baffles to prevent load movement destabilizing the vehicle during transit. Tanker trucks are commonly described by their volume capacity. For example, smaller tanker trucks typically have a capacity of up to 11,000 litres, whilst larger tanker trucks can have capacities ranging from 20,000 litres to 44,000 litres. The tanker truck should be suitable for transporting food-grade material, and will typically be equipped with a pumping system to allow for loading and unloading of the liquid load.

The invention also relates to a process for preparing the concentrated premix, the process comprising:

(a) preparing a mixture of aqueous solids comprising sugars, milk protein, and stabilizer, wherein the mixture is prepared by:

(i) combining at least one of:
sugars, and/or milk protein with water; and then
(ii) adding stabilizer; and then
(iii) optionally adding any remaining sugars and/or milk protein;

(b) combining the mixture of sugars, milk protein and stabilizer with oil and emulsifying to form the concentrated premix.

As explained above, the stabilizer is added after at least one of the more readily soluble ingredients has been combined with water in order to facilitate hydration of the stabilizer. Preferably, the stabilizer is added after combining at least a portion of the sugars with the water, for example after sucrose has been dissolved by combining it with water. The order of addition to water when preparing the mixture of step (a) is preferably: sucrose; and then stabilizer; and then other sugars (such as corn syrups); and then milk protein (for example skimmed milk powder and/or whey protein concentrate).

Another way to think about facilitating the hydration of the stabilizer is to consider the amount of aqueous solids that are added to the aqueous phase in step (a) before the stabilizer is added (i.e. the aqueous solids added in step (i) before the stabilizer is added in step (ii)). As used herein the term "aqueous solids" is used to refer to the solids that are added to the aqueous phase when preparing the concentrated premix. The aqueous solids comprise the sugars, the milk protein and the stabilizers. The aqueous solids do not include the solids that are added as part of the oil phase (which comprise the fat and the emulsifiers). Preferably from 40 wt% to 80 wt% of the aqueous solids are added before the stabilizer, more preferably from 42 wt% to 75 wt%, or even from 44 wt% to 70 wt%.

Preferably the sugars comprise sucrose, and the sucrose is added in step (i) before the stabilizer is added in step (ii).

It is advantageous to add at least some of the aqueous solids after the stabilizer has been added. Thus, it is preferred that step (iii) is included. Preferably the milk protein (together with any associated sugars) is added in step (iii). Additionally or alternatively a portion of the sugars (other than those associated with the milk protein) may be added in step (iii). For example, where the aqueous solids comprise sucrose, corn syrup, skimmed milk powder and stabilizer, the sucrose is preferably added in step (i), the stabilizer is added in step (ii), and the corn syrup and skimmed milk powder are preferably added in step (iii). Alternatively, the sucrose and corn syrup may be added in step (i), the stabilizer added in step (ii), and the skimmed milk powder may be added in step (iii).

The emulsification step may be performed by any suitable equipment. The present inventors have found that the concentrated premix of the present invention can be prepared using a rotor-stator mixer to perform the emulsification step. This is advantageous because a rotor-stator mixer has a relatively compact factory footprint and good energy efficiency, as well as requiring a lower amount of capital outlay than high pressure homogenization equipment. Thus, use of an apparatus comprising a rotor-stator mixing device for preparing the concentrated premix is envisaged.

The high solids content of the concentrated premix means that the efficiency of the emulsification step is increased. This is because for each portion of frozen confection produced, a smaller volume of liquid is passed through the emulsification equipment. This means that more confections can be produced per unit volume of premix which passes through the emulsification equipment, and/or that less energy is used per confection.

A concentrated premix in liquid form is obtainable by the process set out above.

As mentioned above, the concentrated premix can simply be diluted with water to produce a premix for a frozen confection which contains all the ingredients in the appropriate proportions. Preferably the dilution of the concentrated premix to prepare a premix comprises combining the concentrated premix with water, such that the ratio of concentrated premix to water is 1:1 to 1:3, or even 1:1 to 1:2.

The premix (in its diluted form) can be frozen to produce a frozen confection. As such a process for preparing a frozen confection, wherein the concentrated premix is diluted with water and frozen is envisaged. The concentrated premix can be tailored in the dilution step by optionally adding a small quantity of flavouring and/or colouring.

The final frozen confection is preferably aerated, meaning that gas has been intentionally incorporated into the frozen confection premix, for example by mechanical means. The gas is preferably, a food-grade gas such as air, nitrogen, nitrous oxide, or carbon dioxide. Hence the term aeration is not limited to aeration using air. The extent of aeration is measured in terms of 'overrun' (with unit '%'), which is defined as:

$$overrun = \frac{\text{volume of aerated product - volume of initial mix}}{\text{Volume of initial mix}} \times 100\%$$

Preferably the frozen confection has an overrun of from 10% to 200%. More preferably the frozen confection has an overrun of 20% to 190%, 30% to 180%, 40% to 170%, 50% to 160%, 60% to 150%, 70% to 140%, 80% to 130, or even 90% to 120%.

As used herein the term frozen confection means a confection intended for consumption in the frozen state (i.e. where the temperature of the confection is less than 0°C, and preferably where the confection comprises significant amounts of ice). Definitions of various terms and techniques used in frozen confection manufacture are found in Ice Cream by H. Douglas Goff and Richard W. Hartel (2013, 7th Edition, ISBN 978-1-4614-6096-1).

Unless otherwise specified, numerical ranges expressed in the format "from x to y" are understood to include x and y, and in specifying any range of values or amounts, any particular upper value or amount can be associated with any particular lower value or amount.

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

### Figures

By way of example, the present invention is illustrated with reference to the following figures, in which:

Figure 1 shows experimental data from Example 1, wherein Figure 1a is a plot of viscosity data, Figure 1b is a plot of oil droplet size distribution, and Figure 1c is a plot of meltdown data.
Figure 2 shows experimental data from Example 2, wherein Figure 2a is a plot of viscosity data, and Figure 2b is a plot of oil droplet size.

### Examples

The examples are intended to illustrate the invention and are not intended to limit the invention to those examples *per se.*

### Example 1

#### Preparation of a concentrated premix

A concentrated premix having the formulation shown in Table 1 was prepared as follows:

*Aqueous phase:*

Hot water was added to a mixing vessel, followed by the sucrose. The contents were mixed at 80°C to ensure complete dissolution of the sucrose. The stabilizer was then dispersed into the sucrose solution, with heating at 60°C to 75°C. Once the stabilizer had been hydrated, the remaining aqueous phase ingredients (i.e. corn syrups, fructose, dextrose monohydrate, skimmed milk powder, whey protein concentrate) were added, with further mixing. The mixer was set at 3000 rpm during aqueous phase ingredient addition.

*Oil phase:*

The coconut oil was melted and combined with the emulsifiers.

*Oil-in water emulsion:*

The oil phase was added to the aqueous phase and emulsified by passing through a rotor-stator mixer set at 4200 rpm. The rotor-stator mixer had a rotor diameter of 0.145 m and a shearing clearance of 0.5 mm. The concentrated premix was pasteurized and stored at 4°C.

#### Dilution of the concentrated premix

The concentrated premix was combined with water (approximate ratio of concentrated premix to water: 1:1) to provide a premix comprising the ingredients at a standard dilution (premix A). The resulting premix was stored at 4°C.

Table 1: concentrated premix formulation

| Ingredient | Amount (wt%) |
|---|---|
| Coconut oil | 16.7 |

(continued)

| Ingredient | Amount (wt%) |
|---|---|
| Sucrose | 30.4 |
| Skimmed milk powder (35% protein, 52% lactose) | 10.5 |
| Whey protein concentrate (30% protein, 52% lactose) | 6.3 |
| Corn syrup (DE28) | 9.7 |
| Corn syrup (DE40, 95% solids) | 0.3 |
| Fructose | 1.2 |
| Dextrose monohydrate | 1.7 |
| Stabilizers (E407, E410, E412) | 0.8 |
| Emulsifiers (E417) | 0.9 |
| Water | 21.5 |
| Total sugars | 51.8 |
| Ratio of milk protein:fat | 1:3 |

Preparation of a conventional premix (premix B)

A conventional plant-based frozen confection premix (premix B) having an identical composition to premix A was prepared. Briefly, the aqueous solids were combined and mixed at 3000 rpm with heating at 60°C to 75°C, followed by addition of the oil phase (with mixing at 4800 rpm), and emulsification using a two-stage valve-type homogenizer operating at pressures of 250 bar and 30 bar in the first and second stages, respectively. The resulting premix was stored at 4°C.

Premix properties

*Mix viscosity*

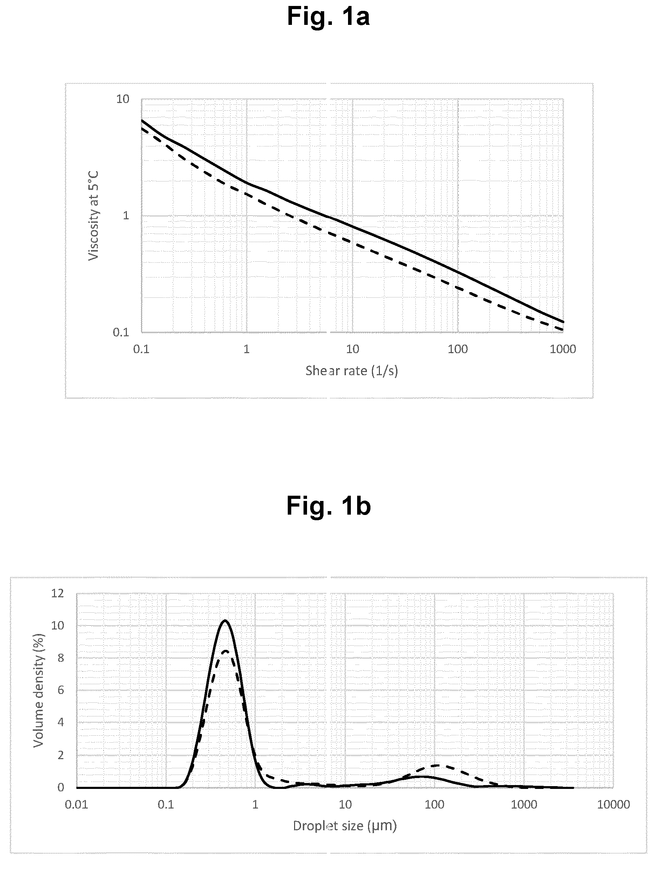

To determine whether or not the rheology of the premix was suitable for factory production, viscosity measurements were obtained. Mix viscosities were measured at different shear rates in 17 mm profiled rheology cups using an Anton Paar Physica MCR501 rheometer. During the measurement, the temperature was maintained at 5°C. A 17 mm profiled bob geometry was immersed in the sample. The sample was equilibrated for 10 minutes. A shear rate sweep was then conducted on the sample using the following measurement profile: shear rate range between 0.001 and 1000 $s^{-1}$ (logarithm spacing), with measurement point duration between 100 and 30 s, and slope of 5 points per decade. The viscosity data for each sample was plotted against the shear rate using a log-log plot.
The viscosity plots are shown in Figure 1a, where the dashed line is premix A, and the solid line is premix B. The results show that both premixes have an acceptable rheology for factory production.

*Oil droplet size distribution*

Oil droplet size distribution was measured using a Malvern Mastersizer 3000 equipped with a wet dispersion unit to determine surface weighted mean droplet size ($D_{3,2}$). The premix samples were diluted 10-fold in a solution of sodium dodecyl sulphate (SDS) and urea (6.6 M urea, 0.1% SDS, pH 7), and subjected to 1 minute of full power sonication within the dispersion unit prior to the start of particle size measurement. This treatment ensures that any weakly bound or flocculated oil droplets are separated into individual oil droplets to give a more accurate representation of the oil droplet size (such treatment cannot break up fully coalesced or aggregated oil droplets).
The oil droplet size distribution data is shown in Figure 1b, where the dashed line is premix A and the solid line is premix B. The results show that oil droplet size distribution of both premixes is very similar, with both having a well-defined peak corresponding to an oil droplet size of less than 1 $\mu$m.

Preparation of a frozen confection from the concentrated premix (Product A)

The concentrated premix was combined with water (approximate ratio of concentrated premix to water: 1:1) to provide a premix comprising the ingredients at a standard dilution (premix A). The resulting premix was aged for 24 hours at 4°C, before being frozen and aerated in a scraped surface heat exchanger (standard ice crem freezer). The air input was controlled to give and overrun of 65%, and freezing was controlled to give a target extrusion temperature of -6°C. The frozen product was hardened in a blast freezer, and then stored at -25°C.

Preparation of a frozen confection from a conventional premix (Product B)

The conventional premix (premix B) was aged for 24 hours at 4°C, before being frozen and aerated in a scraped surface heat exchanger (standard ice crem freezer). The air input was controlled to give and overrun of 65%, and freezing was controlled to give a target extrusion temperature of -6°C. The frozen product was hardened in a blast freezer, and then stored at -25°C.

Properties of the frozen confections

Samples of Product A and Product B were subjected to temperature abuse in order to mimic the thermal regimes which may be encountered during distribution and storage. This involved storing pouches in a temperature-controlled cabinet for 14 days. The temperature of the cabinet was cycled as follows: -20°C for 11.5 hours, +10° for 0.5 hours, -10°C for 11.5 hours, +10° for 0.5 hours. Following the 14 day regime, the products were stored in a freezer for several days before testing.

The meltdown properties of Product A and Product B were compared. Rectangular blocks of each product (approximately 8 cm x 4 cm x 16 cm, 500 ml) were equilibrated at -22°C, weighed and then added to the centre a grated metal plate (20 cm diameter, 0.3 cm pore size) suspended above a mass balance (accurate to 4 decimal places). Samples were analysed in a temperature-controlled cabinet at 22°C, with the mass of the melted product that passed through the grating being recorded over a 4 hour time period.

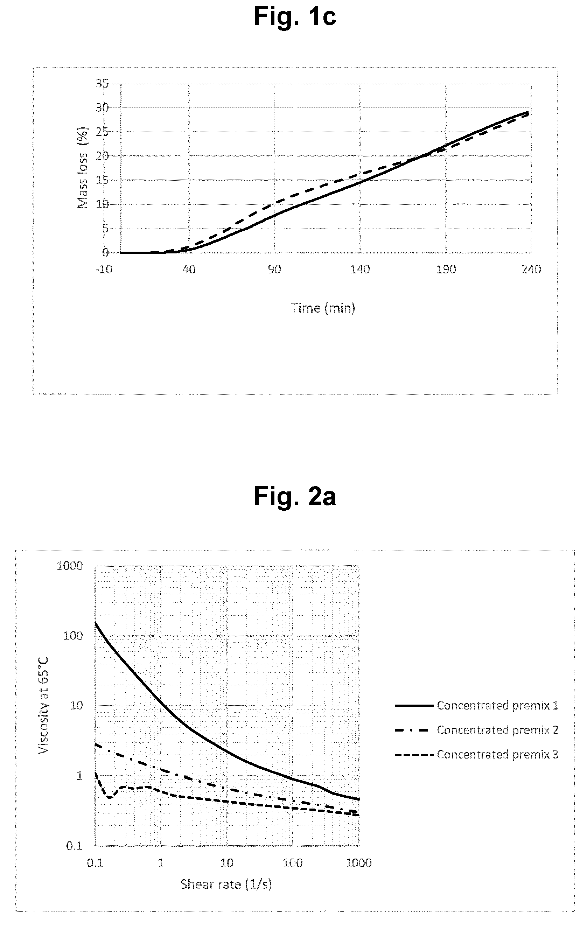

Figure 1c shows a plot of meltdown data (percentage mass loss as a function of time, mean of 3 experiments), where the dashed line is Product A and the solid line is Product B. The results show that there is little difference in the meltdown properties of the ice cream prepared from the concentrated premix and that prepared using a conventional premix.

## Example 2

A number of different methods were used to prepare concentrated premixes. These concentrated premixes (i.e. concentrated premix 1, concentrated premix 2, concentrated premix 3) all had the formulation shown in Table 2.

Table 2: concentrated premix formulation

| Ingredient | Amount (wt%) |
|---|---|
| Coconut oil | 16.5 |
| Sucrose | 28.7 |
| Skimmed milk powder (35% protein, 52% lactose) | 10.4 |
| Whey protein concentrate (30% protein, 52% lactose) | 6.2 |
| Corn syrup (DE28) | 8.3 |
| Corn syrup (DE63, 78% solids) | 8.3 |
| Stabilizers (E407, E410, E412) | 0.7 |
| Emulsifiers (E417) | 0.9 |
| Water | 20.0 |
| Total sugars | 52.0 |
| Ratio of milk protein:fat | 1:3 |

*Concentrated premix 1:*

Hot water at 80°C was added to a mixing vessel, followed by the sucrose pre-mixed with the emulsifiers. The contents were mixed to ensure complete dissolution of the sucrose. The stabilizer was then dispersed into the sucrose solution. Once the stabilizer had been hydrated, the corn syrups, skimmed milk powder and whey protein concentrate were added, with further mixing. Finally, the coconut oil was added. The rotor stator mixer was set at 3000 rpm throughout the ingredient addition. After the addition of the final ingredient (i.e. coconut oil), the concentrated premix was kept in recirculation, with samples being collected at 1 min, 2 min, 4 min, 8 min, and 14 min.

*Concentrated premix 2:*

Hot water at 80°C was added to a mixing vessel, followed by the sucrose (pre-mixed with the emulsifiers) and corn syrups. The contents were mixed to ensure complete dissolution of the sugars. The stabilizer was then dispersed into the solution. Once the stabilizer had been hydrated, the skimmed milk powder and whey protein concentrate were added, with further mixing. Finally, the coconut oil was added. The rotor stator mixer was set at 3000 rpm throughout the ingredient addition. After the addition of the final ingredient (i.e. coconut oil), the concentrated premix was kept in recirculation, with samples being collected at 1 min, 2 min, 4 min, 8 min, and 14 min.

*Concentrated premix 3:*

Hot water at 80°C was added to a mixing vessel, followed by the sucrose (pre-mixed with the emulsifiers), corn syrups, skimmed milk powder and whey protein concentrate. The contents were mixed thoroughly. The stabilizer was then dispersed into the solution. Once the stabilizer had been hydrated, the coconut oil was added. The rotor stator mixer was set at 3000 rpm throughout the ingredient addition. After the addition of the final ingredient (i.e. coconut oil), the concentrated premix was kept in recirculation, with samples being collected at 1 min, 2 min, 4 min, 8 min, and 14 min.

<u>Premix properties</u>

*Mix viscosity*

Mix viscosities were measured as described in Example 1. The viscosity plots for the samples taken after a recirculation time of 2 min are shown in Figure 2a. The results show that adding the stabilizers at an earlier point during premix production results in an increase in viscosity. The inventors believe this is due to more efficient activation of the stabilizers.

*Oil droplet size*

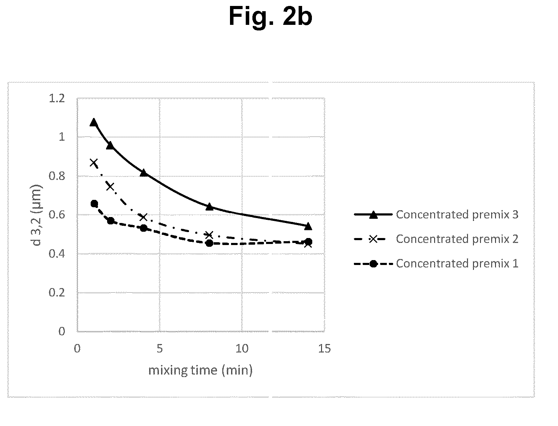

Oil droplet size was measured as described in Example 1. The oil droplet size data is shown in Figure 2b. The results show that adding the stabilizers at an earlier point during premix production correlates with droplet size reduction being achieved in a shorter amount of time.

**Claims**

1. A concentrated premix for making a frozen confection, wherein the concentrated premix is an oil-in-water emulsion in liquid form comprising:

   • fat in an amount of 8 wt% to 20 wt%
   • sugars in an amount of 42 wt% to 64 wt%;
   • milk protein in an amount of 4.6 wt% to 14 wt%;
   • stabilizer in an amount of 0.6 wt% to 1.3 wt%, wherein the stabilizer is selected from the group consisting of alginates, carrageenan, locust bean gum, guar gum, pectin, xanthan gum, sodium carboxymethyl cellulose, and mixtures thereof;
   • emulsifier in an amount of 0.5 wt% to 2 wt%; and
   • water in an amount of 16 wt% to 36 wt%.

2. The concentrated premix as claimed in claim 1, wherein the concentrated premix comprises fat in an amount of 10 wt% to 18 wt%.

3. The concentrated premix as claimed in claim 1 or claim 2, wherein the concentrated premix comprises sugars in an amount of 42 wt% to 60 wt%.

4. The concentrated premix as claimed in any one of claims 1 to 3, wherein the concentrated premix comprises milk protein in an amount of 4.8 wt% to 10 wt%.

5. The concentrated premix as claimed in any one of claims 1 to 4, wherein the concentrated premix comprises stabilizer in an amount of 0.7 wt% to 1.1 wt%.

6. The concentrated premix as claimed in any one of claims 1 to 5, wherein the concentrated premix comprises water in an amount of 18 wt% to 29 wt%.

7. The concentrated premix as claimed in any one of claims 1 to 6, wherein the ratio of milk protein to fat is 1:2 to 1:4.

8. An intermediate bulk container containing the concentrated premix as claimed in any one of claims 1 to 7, wherein the intermediate bulk container has a tank capacity of up to 2000 litres.

9. A process for preparing a concentrated premix as claimed in any one of claims 1 to 7, the process comprising:

(a) preparing a mixture of aqueous solids comprising sugars, milk protein, and stabilizer, wherein the mixture is prepared by:

(i) combining at least one of:
sugars, and/or milk protein with water; and then
(ii) adding stabilizer; and then
(iii) optionally adding any remaining sugars and/or milk protein;

(b) combining the mixture of sugars, milk protein and stabilizer with fat and emulsifying to form the concentrated premix.

10. The process as claimed in claim 9, wherein the mixture of step (a) is prepared by:

(i) combining at least a portion of the sugars with water; and then
(ii) adding stabilizer; and then
(iii) adding milk protein and optionally further portions of the sugars.

11. The process as claimed in claim 9 or claim 10, wherein from 40 wt% to 80 wt% of the aqueous solids are added in step (i).

12. A process for preparing a frozen confection, wherein the concentrated premix as claimed in any one of claims 1 to 7 is diluted with water and frozen.

13. The process as claimed in claim 12, wherein the ratio of concentrated premix to water is 1:1 to 1:3.

14. Use of an apparatus comprising a rotor-stator mixing device for preparing a concentrated premix as claimed in any one of claims 1 to 7.

**Patentansprüche**

1. Konzentrierte Vormischung zum Herstellen einer Tiefkühlsüßspeise, wobei die konzentrierte Vormischung eine Öl-in-Wasser-Emulsion in flüssiger Form ist, umfassend:

• Fett in einer Menge von 8 Gew.-% bis 20 Gew.-%
• Zuckern in einer Menge von 42 Gew.-% bis 64 Gew.-%;
• Milchprotein in einer Menge von 4,6 Gew.-% bis 14 Gew.-%;
• Stabilisator in einer Menge von 0,6 Gew.-% bis 1,3 Gew.-%, wobei der Stabilisator aus der Gruppe ausgewählt ist, bestehend aus Alginaten, Carrageen, Johannisbrotkernmehl, Guarkernmehl, Pektin, Xanthangummi, Natriumcarboxymethylcellulose und Mischungen davon;
• Emulgator in einer Menge von 0,5 Gew.-% bis 2 Gew.-%; und
• Wasser in einer Menge von 16 Gew.-% bis 36 Gew.-%.

**2.** Konzentrierte Vormischung nach Anspruch 1, wobei die konzentrierte Vormischung Fett in einer Menge von 10 Gew.-% bis 18 Gew.-% umfasst.

**3.** Konzentrierte Vormischung nach Anspruch 1 oder Anspruch 2, wobei die konzentrierte Vormischung Zucker in einer Menge von 42 Gew.-% bis 60 Gew.-% umfasst.

**4.** Konzentrierte Vormischung nach einem der Ansprüche 1 bis 3, wobei die konzentrierte Vormischung Milchprotein in einer Menge von 4,8 Gew.-% bis 10 Gew.-% umfasst.

**5.** Konzentrierte Vormischung nach Anspruch 1 bis 4, wobei die konzentrierte Vormischung Stabilisator in einer Menge von 0,7 Gew.-% bis 1,1 Gew.-% umfasst.

**6.** Konzentrierte Vormischung nach einem der Ansprüche 1 bis 5, wobei die konzentrierte Vormischung Wasser in einer Menge von 18 Gew.-% bis 29 Gew.-% umfasst.

**7.** Konzentrierte Vormischung nach einem der Ansprüche 1 bis 6, wobei das Verhältnis von Milchprotein zu Fett 1 : 2 bis 1 : 4 beträgt.

**8.** Schüttgutbehälter, der die konzentrierte Vormischung nach Anspruch 1 bis 7 enthält, wobei der Schüttgutbehälter eine Tankkapazität von bis zu 2000 Litern besitzt.

**9.** Prozess zum Herstellen einer konzentrierten Vormischung nach einem der Ansprüche 1 bis 7, das Verfahren umfassend:

(a) Herstellen einer Mischung aus wasserhaltigen Feststoffen, die Zucker, Milchprotein und Stabilisator umfasst, wobei die Mischung hergestellt wird durch:

(i) Vermischen mindestens eines der Folgenden: Zucker und/oder Milchprotein mit Wasser; und dann
(ii) Hinzufügen eines Stabilisators; und dann
(iii) optionales Hinzufügen von restlichem Zucker und/oder Milchprotein;

(b) Vermischen der Mischung aus Zucker, Milchprotein und Stabilisator mit Fett und Emulgator, um die konzentrierte Vormischung zu bilden.

**10.** Prozess nach Anspruch 9, wobei die Mischung aus Schritt (a) hergestellt wird durch:

(i) Vermischen mindestens eines Teils der Zucker mit Wasser; und dann
(ii) Hinzufügen eines Stabilisators; und dann
(iii) Hinzufügen von Milchprotein und optionalem Hinzufügen fernerer Teile der Zucker.

**11.** Verfahren nach Anspruch 9 oder Anspruch 10, wobei in Schritt (i) 40 Gew.-% bis 80 Gew.-% der wasserhaltigen Feststoffe hinzugefügt werden.

**12.** Prozess zum Herstellen einer Tiefkühlsüßspeise, wobei die konzentrierte Vormischung nach einem der Ansprüche 1 bis 7 mit Wasser verdünnt und gefroren wird.

**13.** Prozess nach Anspruch 12, wobei das Verhältnis von konzentrierter Vormischung zu Wasser 1 : 1 bis 1 : 3 beträgt.

**14.** Verwendung einer Vorrichtung, umfassend eine Rotor-Stator-Mischvorrichtung zum Herstellen einer konzentrierten Vormischung nach einem der Ansprüche 1 bis 7.

**Revendications**

**1.** Prémélange concentré pour la fabrication d'une confiserie glacée, dans lequel le prémélange concentré est une émulsion huile-dans-eau sous forme liquide comprenant :

• de la matière grasse en une quantité de 8 % en poids à 20 % en poids

• des sucres en une quantité de 42 % en poids à 64 % en poids ;
• des protéines de lait en une quantité de 4,6 % en poids à 14 % en poids ;
• un stabilisant en une quantité de 0,6 % en poids à 1,3 % en poids, dans lequel le stabilisant est sélectionné dans le groupe constitué d'alginates, de carraghénane, de gomme de caroube, de gomme de guar, de pectine, de gomme xanthane, de carboxyméthylcellulose sodique, et des mélanges de ceux-ci ;
• un émulsifiant en une quantité de 0,5 % en poids à 2 % en poids ; et
• de l'eau en une quantité de 16 % en poids à 36 % en poids.

2. Prémélange concentré selon la revendication 1, dans lequel le prémélange concentré comprend de la matière grasse en une quantité de 10 % en poids à 18 % en poids.

3. Prémélange concentré selon la revendication 1 ou la revendication 2, dans lequel le prémélange concentré comprend des sucres en une quantité de 42 % en poids à 60 % en poids.

4. Prémélange concentré selon l'une quelconque des revendications 1 à 3, dans lequel le prémélange concentré comprend des protéines de lait en une quantité de 4,8 % en poids à 10 % en poids.

5. Prémélange concentré selon l'une quelconque des revendications 1 à 4, dans lequel le prémélange concentré comprend un stabilisant en une quantité de 0,7 % en poids à 1,1 % en poids.

6. Prémélange concentré selon l'une quelconque des revendications 1 à 5, dans lequel le prémélange concentré comprend de l'eau en une quantité de 18 % en poids à 29 % en poids.

7. Prémélange concentré selon l'une quelconque des revendications 1 à 6, dans lequel le rapport protéines de lait à matière grasse est de 1:2 à 1:4.

8. Récipient en vrac intermédiaire contenant le prémélange concentré selon l'une quelconque des revendications 1 à 7, dans lequel le récipient en vrac intermédiaire a une capacité de réservoir allant jusqu'à 2 000 litres.

9. Procédé de préparation d'un prémélange concentré selon l'une quelconque des revendications 1 à 7, le procédé comprenant :

   (a) la préparation d'un mélange de solides aqueux comprenant des sucres, des protéines de lait, et un stabilisant, dans lequel le mélange est préparé :

       (i) en combinant au moins l'un des éléments suivants :
       des sucres, et/ou des protéines de lait avec de l'eau ; et puis
       (ii) en ajoutant un stabilisant ; et puis
       (iii) éventuellement en ajoutant des sucres restants et/ou des protéines de lait restantes ;

   (b) la combinaison du mélange de sucres, de protéines de lait et de stabilisant avec de la matière grasse et l'émulsion pour former le prémélange concentré.

10. Procédé selon la revendication 9, dans lequel le mélange de l'étape (a) est préparé :

    (i) en combinant au moins une partie des sucres avec de l'eau ; et puis
    (ii) en ajoutant un stabilisant ; et puis
    (iii) en ajoutant des protéines de lait et éventuellement d'autres parties des sucres.

11. Procédé selon la revendication 9 ou la revendication 10, dans lequel de 40 % en poids à 80 % en poids des solides aqueux sont ajoutés à l'étape (i).

12. Procédé de préparation d'une confiserie glacée, dans lequel le prémélange concentré selon l'une quelconque des revendications 1 à 7 est dilué avec de l'eau et glacé.

13. Procédé selon la revendication 12, dans lequel le rapport du prémélange concentré à l'eau est de 1:1 à 1:3.

14. Utilisation d'un appareil comprenant un dispositif de mélange rotor-stator pour préparer un prémélange concentré selon l'une quelconque des revendications 1 à 7.

# Fig. 1a

# Fig. 1b

# Fig. 1c

# Fig. 2a

# Fig. 2b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1415542 A1

- WO 2016116336 A

**Non-patent literature cited in the description**

- **H. DOUGLAS GOFF** ; **RICHARD W. HARTEL**. Ice Cream. 2013